(19) Europäisches Patentamt
European Patent Office
Office européen des brevets

(11) EP 4 660 234 A1

(12) # EUROPEAN PATENT APPLICATION
published in accordance with Art. 153(4) EPC

(43) Date of publication:
**10.12.2025 Bulletin 2025/50**

(21) Application number: **24780492.5**

(22) Date of filing: **27.03.2024**

(51) International Patent Classification (IPC):
***C08L 21/00*** *(2006.01)* ***B60C 1/00*** *(2006.01)*
***C08K 3/36*** *(2006.01)* ***C08K 5/541*** *(2006.01)*
***C08L 9/00*** *(2006.01)* ***C08L 17/00*** *(2006.01)*

(52) Cooperative Patent Classification (CPC):
**B60C 1/00; C08K 3/36; C08K 5/541; C08L 9/00; C08L 17/00; C08L 21/00;** Y02W 30/62

(86) International application number:
**PCT/JP2024/012319**

(87) International publication number:
**WO 2024/204390 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023055990**

(71) Applicant: **TOKUYAMA CORPORATION**
**Yamaguchi 745-8648 (JP)**

(72) Inventors:
- **MATSUMOTO Tomoki**
**Shunan-shi, Yamaguchi 745-8648 (JP)**
- **KONDOU Manabu**
**Shunan-shi, Yamaguchi 745-8648 (JP)**

(74) Representative: **Canzler & Bergmeier Patentanwälte Partnerschaft mbB**
**Despag-Straße 6**
**85055 Ingolstadt (DE)**

(54) **TIRE RUBBER COMPOSITION, METHOD FOR PRODUCING TIRE RUBBER COMPOSITION, TIRE RUBBER MATERIAL, METHOD FOR PRODUCING TIRE RUBBER MATERIAL, AND RECLAIMED RUBBER**

(57) [Problem] To provide: a tire rubber material having a good balance among wear resistance, breaking strength, fatigue cracking resistance and low fuel consumption properties even when a reclaimed rubber is added thereto; a tire rubber composition suitable for the tire rubber material; methods for producing the same; and a reclaimed rubber suitable for the tire rubber composition. [Solution] The tire rubber composition is obtained by adding 5 to 100 parts by mass inclusive of a fumed-silica-containing reclaimed rubber to 100 parts by mass of a diene rubber. Preferably, 5 to 90 parts by mass inclusive of fumed silica is further added to the tire rubber composition. Preferably, 0.1 to 30 parts by mass inclusive of a silane coupling agent is further added to the tire rubber composition.

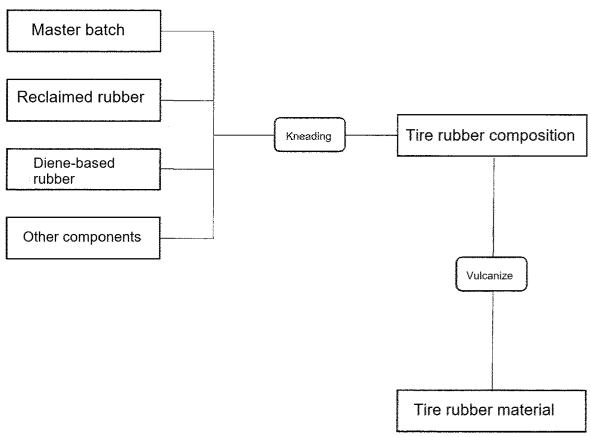


EP 4 660 234 A1

## Description

TECHNICAL FIELD

The present disclosure relates to a tire rubber composition, a tire rubber material, a method for producing the tire rubber composition and the tire rubber material, and a reclaimed rubber.

BACKGROUND

Automobile tires are required to have various properties such as wear resistance, fuel efficiency, and wet grip performance. For example, in response to environmental regulations such as labeling systems in Japan and Europe, and the SmartWay program in North America, there is demands particularly to lower rolling resistance to achieve better fuel efficiency.

Among the automobile tires, for heavy-duty tires such as for trucks and buses, such tires are demanded to achieve longer running lifespan and not to crack when load is applied compared to the case of passenger car tires. That is, wear resistance, tensile strength at break, and fatigue crack resistance are particularly demanded. However, wear resistance and fuel efficiency are in a tradeoff relation; thus, it is difficult for the heavy-duty tires to achieve both of wear resistance and fuel efficiency.

From the point of reducing environmental load and utilizing resources effectively, reclaimed rubbers which are recycled from used rubber materials are used. For example, according to JIS K 6313, a reclaimed rubber is made by recycling used rubbers such as automobile tires, tubes, and other rubber products, and the reclaimed rubber satisfies predetermined properties.

However, the properties which are demanded for the tires are lowered when such reclaimed rubber is blended in a tire composition; hence, there is no reason to actively blend the reclaimed rubber in the tire rubber composition. Therefore, the reclaimed rubber was only considered as a mixture which increases the volume of the tire rubber composition.

Patent Document 1 discloses a tire rubber composition made by blending a natural rubber, a reclaimed rubber including carbon black, a carbon coupling agent, and a wet silica. Patent Document 1 discloses that by using such rubber composition, tensile strength at break property and low heat generation property are improved.

Patent Document 2 discloses a rubber composition in which a hydrogen amount of carbon black as a reinforcing filler is lowered. Patent Document 2 discloses that by using such rubber composition, fatigue-crack resistance can be improved.

PRIOR DOCUMENTS

PATENT DOCUMENTS

Patent Document 1: JP Patent Application Laid Open No.2018-123272
Patent Document 2: WO2016/024397

SUMMARY

PROBLEMS TO BE SOLVED BY THE INVENTION

Patent Document 1 does not evaluate wear resistance and fatigue-crack property of the tire rubber composition; hence, the tire rubber composition was not suitable for a heavy-duty tire. Regarding the tire rubber composition of Patent Document 2, wear resistance and fatigue-crack resistance were insufficient.

The present disclosure is achieved in view of such circumstances, and the object is to provide a tire rubber material having good balance between wear resistance, tensile strength at break, fatigue-crack resistance, and fuel efficiency; a tire rubber composition suitable for the tire rubber material; and a reclaimed rubber suitable for the tire rubber composition even when a reclaimed rubber is blended.

MEANS FOR SOLVING THE OBJECTS

As discussed in above, the embodiments of the present disclosure are as described in below.

[1] A tire rubber composition including 5 parts by mass or more and 100 parts by mass or less of a reclaimed rubber including fumed silica with respect to 100 parts by mass of a diene-based rubber.
[2] The tire rubber composition according to [1] further including 5 parts by mass or more and 90 parts by mass or less of a fumed silica.
[3] The tire rubber composition according to [1] further including 0.1 parts by mass or more and 30 parts by mass or less of a silane coupling agent.
[4] The tire rubber composition according to [2] further including 0.1 parts by mass or more and 30 parts by mass or less of a silane coupling agent.
[5] A tire rubber material made by vulcanizing the tire rubber composition according to any one of [1] to [4].
[6] The tire rubber material according to [5], wherein a tear strength TS is 40 kN/m or greater.
[7] A method for producing a tire rubber composition including a step of obtaining the tire rubber composition by kneading a diene-based rubber and a reclaimed rubber including fumed silica;
wherein the tire rubber composition includes 5 parts by mass or more and 100 parts by mass or less of the reclaimed rubber including fumed silica with respect to 100 parts by mass of the diene-based rubber.
[8] The method for producing the tire rubber composition according to [7], wherein a master batch obtained by kneading a diene-based rubber and a fumed silica is further blended and kneaded during the step of obtaining the tire rubber composition,
wherein the tire rubber composition includes 5 parts by mass or more and 100 parts by mass or less of the reclaimed rubber including fumed silica with respect to a total of 100 parts by mass of the diene-based rubber included in the master batch and the diene-based rubber blended during the step of obtaining the tire rubber composition.
[9] The method for producing the tire rubber composition according to [7] further including a step of obtaining the reclaimed rubber including fumed silica by processing a rubber material including fumed silica.
[10] The method for producing the tire rubber composition according to [7] further blending and kneading 5 parts by mass or more and 90 parts by mass or less of a fumed silica with respect to 100 parts by mass of the diene-based rubber during the step of obtaining the tire rubber composition.
[11] The method for producing the tire rubber composition according to [7] further blending and kneading 0.1 parts by mass or more and 30 parts by mass or less of a silane coupling agent with respect to 100 parts by mass of the diene-based rubber during the step of obtaining the tire rubber composition.
[12] A method for producing a tire rubber material including a step of vulcanizing the tire rubber composition obtained by the method for producing the tire rubber composition according to any one of [7] to [11].
[13] A reclaimed rubber including a fumed silica.
[14] The reclaimed rubber according to [13] including 5 parts by mass or more and 90 parts by mass or less of the fumed silica with respect to 100 parts by mass of a rubber component included in the reclaimed rubber.

## EFFECTS OF THE INVENTION

According to the present disclosure, it is possible to provide a tire rubber material having good wear resistance even when a reclaimed rubber is blended, a tire rubber composition suitable for the tire rubber material, a method for producing thereof, and the reclaimed rubber suitable for the tire rubber composition.

## BRIEF DESCRIPTION OF THE DRAWINGS

FIG.1 shows steps for producing a tire rubber composition and a tire rubber material using a master batch and a reclaimed rubber.

## DETAILED DESCRIPTION

In below, details of the present disclosure are described in the order as shown in below based on specific embodiments.

1. Tire Rubber Composition

    1.1 Diene-Based Rubber
    1.2 Reclaimed Rubber
    1.3 Fumed Silica
    1.4 Silane Coupling Agent
    1.5 Other Components

2. Method for Producing Tire Rubber Composition
3. Tire Rubber Material

(1. Tire Rubber Composition)

A tire rubber composition according to the present embodiment is a kneaded product used to obtain a tire rubber material, and it at least includes a diene-based rubber and a reclaimed rubber.

(1.1 Diene-Based Rubber)

Examples of the diene-based rubber included in the tire rubber composition according to the present embodiment include a natural rubber, an isoprene rubber, a butadiene rubber, a styrene-butadiene rubber, an acrylonitrile-butadiene rubber, a butyl rubber, an ethylene-propylene-diene rubber, and a chloroprene rubber. Among these, at least one selected from a natural rubber and an isoprene rubber is preferable, a natural rubber or a combination of a natural rubber and an isoprene rubber is more preferable, and a natural rubber is even more preferable.

Examples of the natural rubber includes modified natural rubbers such as a natural rubber (NR), an epoxidized natural rubber (ENR), a hydrogenated natural rubber (HNR), a deproteinized natural rubber (DPNR), and a high purity natural rubber (HPNR). These natural rubbers may be used alone, or may be used by combining two or more natural rubbers.

(1.2 Reclaimed Rubber)

In the present embodiment, the reclaimed rubber is a rubber which is reclaimed by processing the rubber material. As the rubber material before being processed (pre-reclaimed rubber), a vulcanized rubber is preferable. The vulcanized rubber may be a used rubber such as wastes, or it may be an unused rubber. Examples of the process performed to the rubber material include pulverization and desulfurization. In the present embodiment, the reclaimed rubber is preferably a rubber which is obtained by desulfurizing the vulcanized rubber. The used rubber is not particularly limited as long as it is usual rubber materials, and examples include automobile tire tubes.

In the present embodiment, the reclaimed rubber includes fumed silica. That is, the rubber material before it is reclaimed includes fumed silica. Fumed silica is silicon dioxide in a fine particle form produced by hydrolyzing silicon tetrachloride at high temperature in oxyhydrogen flame. Therefore, fumed silica is called dry silica and a method for producing this is different from a method for producing silica produced by wet-process such as a precipitation method and a gelation method. Regarding fumed silica, a primary particle size of a primary aggregate (minimal configurational unit) is smaller and a nitrogen absorption BET specific area is larger compared to those of silica produced by wet-process. Particles of fumed silica are aggregated and fused in a beaded-form, and forms a bulky agglomerate.

As the reclaimed rubber contains fumed silica, the properties (wear resistance, tensile strength at break, fatigue-crack resistance, fuel efficiency, etc.) of the tire rubber material obtained by blending such reclaimed rubber are about the same as the properties of the tire rubber material having the same composition but without the reclaimed rubber, and better than the properties of the tire rubber material including carbon black. Therefore, the tire rubber material obtained by blending the reclaimed rubber including fumed silica is suitable for heavy-duty tires. That is, the reclaimed rubber can be used as an additive to improve the properties of the tire rubber material.

In the present embodiment, preferably a BET specific surface area of fumed silica included in the reclaimed rubber is 50 $m^2/g$ or greater, 80 $m^2/g$ or greater, 120 $m^2/g$ or greater, 200 $m^2/g$ or greater, 250 $m^2/g$ or greater, 300 $m^2/g$ or greater, or 350 $m^2/g$ or greater. When the BET specific area of fume silica is within the above-mentioned range, a sufficient number of silanol groups, which are the reaction points with other components, can be secured.

The upper limit of the BET specific area of the fumed silica included in the reclaimed rubber is not particularly limited, and for example, it may be 500 $m^2/g$. When the BET specific area of fumed silica is too small, it becomes necessary to increase a flame temperature during the production of fumed silica, which may lead to a loss of the fumed silica-specific structure, and the stable production of fumed silica tends to become difficult. When the BET specific area of fumed silica is too large, the stable production of fumed silica tends to become difficult.

Based on the property against water, fumed silica can be grouped into a hydrophilic fumed silica and a hydrophobic fumed silica. Fumed silica has a silanol group on the surface. The silanol group is chemically active, and it particularly easily reacts with water. Thus, a surface treatment (hydrophobic treatment) to lower the reactivity against water may be performed by reacting the silanol group with other substances. The fumed silica performed with the hydrophobic treatment is called a hydrophobic fumed silica, and the fumed silica which is not performed with the hydrophobic treatment is called a hydrophilic fumed silica.

In the present embodiment, the hydrophobic fumed silica and the hydrophilic fumed silica are separated using a modified hydrophobic degree (M-value) shown in below. The modified hydrophobic degree (M-value) is a value obtained

by a measurement method using the property that the hydrophobic fumed silica floats in water but completely suspends in methanol. As a method for measuring the M-value, a method described in examples of WO 2004/099075 can be used. When the hydrophobic fumed silica and the hydrophilic fumed silica are represented using the M-value, the hydrophobic fumed silica has the M-value of 1 or greater, and the hydrophilic fumed silica has the M-value of less than 1.

In the present embodiment, the fumed silica included in the reclaimed rubber is preferably the hydrophilic fumed silica. As the reclaimed rubber includes the hydrophilic fumed silica, the properties of the tire rubber material obtained by blending the reclaimed rubber tend to improve.

Note that, it is known that compared to carbon black, silica produced by wet-process reduces wear resistance of the tire rubber material; hence, silica produced by wet-process is not blended in the heavy-duty tire. That is, the reclaimed rubber which uses the used heavy-duty tire as the raw material does not include wet silica . Also, it is difficult to blend fumed silica with the rubber component since fumed silica is bulky; thus, the tire blended with fumed silica is not commercially available. That is, the reclaimed rubber using the used tire as the raw material does not include fumed silica.

In the tire rubber composition according to the present embodiment, 5 parts by mass or more and 100 parts by mass or less of the reclaimed rubber is blended with respect to 100 parts by mass of the diene-based rubber. When the blending amount of the reclaimed rubber is within the above-mentioned range, the properties of the tire rubber material are suitable for the heavy-duty tire, eco-friendly products can be produced which has a high recycling level. The blending amount of the reclaimed rubber with respect to 100 parts by mass of the diene-based rubber is preferably 7 parts by mass or more, and more preferably 9 parts by mass or more. Also, the blending amount of the reclaimed rubber with respect to 100 parts by mass of the diene-based rubber is preferably 70 parts by mass or less, more preferably 50 parts by mass or less, even more preferably 40 parts by mass or less, and particularly preferably 35 parts by mass or less.

The reclaimed rubber includes the rubber component and fumed silica. In the method for producing the tire rubber composition which is described later, prior to kneading the diene-based rubber and the reclaimed rubber, the rubber component in the reclaimed rubber is distinguished from the diene-based rubber. Once the diene-based rubber and the reclaimed rubber are kneaded, the rubber component and the diene-based rubber become one integrated component in the kneaded product. The composition of the rubber component in the reclaimed rubber may be the same as that of the above-mentioned diene-based rubber, or it may be different.

The reclaimed rubber preferably includes 5 parts by mass or more and 90 parts by mass or less of fumed silica, more preferably 10 parts by mass or more and 70 parts by mass or less, even more preferably 15 parts by mass or more and 55 parts by mass or less with respect to 100 parts by mass of the rubber component.

Also, the reclaimed rubber may include components other than the rubber component and fumed silica. Examples of such components include coupling agents such as a silane coupling agent, lubricant (such as stearic acid and oils), fillers (such as carbon black and wet silica).

(1.3. Fumed Silica)

The tire rubber composition may include other components besides the above-mentioned components (the diene-based rubber and the reclaimed silica). In the present embodiment, in addition to the above-mentioned components, the tire rubber composition preferably includes blended fumed silica. By blending fumed silica in addition to the above-mentioned components, it is thought that a structure caused by fumed silica can be easily formed in the rubber composition. As a result, by having such structure in the tire rubber material obtained by vulcanizing the tire rubber composition, it is thought that the wear resistance of the tire rubber material is improved.

In the method for producing the tire rubber composition described in below, prior to kneading fumed silica and the reclaimed rubber, said fumed silica is distinguished from the fumed silica included in the reclaimed rubber. Once said fumed silica and the reclaimed rubber are kneaded, said fumed silica and the fumed silica in the reclaimed rubber become one integrated component in the kneaded product.

Types, physical properties, etc., of the fumed silica to be blended may be the same as or different from the types and the physical properties of the fumed silica included in the reclaimed rubber. Regarding the fumed silica to be blended, the same description relating to the fumed silica included in the reclaimed rubber can be applied. Thus, the fumed silica to be blended is preferably a hydrophilic fumed silica. Also, similar to the fumed silica included in the reclaimed rubber, the BET specific surface area of the fumed silica to be blended is 50 $m^2/g$ or greater, 80 $m^2/g$ or greater, 120 $m^2/g$ or greater, 200 $m^2/g$ or greater, 250 $m^2/g$ or greater, 300 $m^2/g$ or greater, or 350 $m^2/g$ or greater. The upper limit of the BET specific surface area of the blended fumed silica is not particularly limited, and preferably it is 500 $m^2/g$.

In the tire rubber composition, the blending amount of the fumed silica to be blended is preferably 5 parts by mass or more and 90 parts by mass or less with respect to 100 parts by mass of the diene-based rubber. When the blending amount of the fumed silica to be blended is within the above-mentioned range, the wear resistance and the fatigue-crack resistance of the tire rubber material can be improved.

The blending amount of the fumed silica to be blended is preferably 8 parts by mass or more, more preferably 10 parts by mass or more, and even more preferably 15 parts by mass or more with respect to 100 parts by mass of the diene-based rubber. Also, the blending amount of the fumed silica to be blended is preferably 80 parts by mass or less, more preferably 70 parts by mass or less, and even more preferably 55 parts by mass or less with respect to 100 parts by mass of the diene-based rubber.

Also, in the tire rubber composition, the amount of fumed silica, that is the total amount of the fumed silica to be blended and the fumed silica included in the reclaimed rubber is preferably 5 parts by mass or more and 90 parts by mass or less, more preferably 10 parts by mass or more and 70 parts by mass or less, and even more preferably 15 parts by mass or more and 55 parts by mass or less with respect to 100 parts by mass of the total of the diene-based rubber and the rubber component in the reclaimed rubber. When the amount of fumed silica is too small, the wear resistance and the fatigue-crack resistance of the obtained tire rubber material tend to be insufficient. When the amount of fumed silica is too large, the fumed silica is not sufficiently dispersed in the diene-based rubber; thus, a good kneaded product may become difficult to obtain.

(1.4. Silane Coupling Agent)

In the present embodiment, in addition to the above-mentioned components, the tire rubber composition preferably includes the silane coupling agent. By including the silane coupling agent, a cross-linking structure between the diene-based rubber and fumed silica tends to be formed easily via the silane coupling agent. As a result, dispersibility of fumed silica in the tire rubber composition is improved, and the wear resistance and the fatigue-crack resistance of the tire rubber material can be improved.

In the method for producing the tire rubber composition mentioned later, when the silane coupling agent is included in the reclaimed rubber, the silane coupling agent is distinguished from the silane coupling agent included in the reclaimed rubber prior to kneading the silane coupling agent and the reclaimed rubber. Once the silane coupling agent and the reclaimed rubber are kneaded, the silane coupling agent and the silane coupling agent included in the reclaimed rubber become one integrated component in the kneaded product.

Types, physical properties, etc., of the silane coupling agent to be blended may be the same as or different from the types and the physical properties of the silane coupling agent included in the reclaimed rubber. The silane coupling agent to be blended is not particularly limited, as long as it is usually used for the rubber composition. In the present embodiment, a sulfur-containing silane coupling agent is preferable. Examples of the sulfur-containing silane coupling agent include bis(3-triethoxysilylpropyl)tetrasulfide, bis(3-triethoxysilylpropyl)disulfide, 3-trimethoxysilylpropylbenzothiazole tetrasulfide, γ-mercaptopropyltriethoxysilane, 3-octanoylthiopropyltriethoxysilane, and mercapto-thiocarboxylate oligomers.

In the present embodiment, from the point of heat resistance (heat aging property) of the tire rubber composition, the silane coupling agent to be blended is preferably blocked-mercaptosilane, and mercapto-thiocarboxylate oligomer is particularly preferable.

Mercapto-thiocarboxylate oligomers are oligomers of thiocarboxylate including a mercapto group. An example of a molecular structure of mercapto-thiocarboxylate oligomer is shown in below. In the below molecular structure, (x + y) which is a total of a repeating number (x) of linking units A and a repeating number of linking units B is preferably between 3 to 300. When this range is satisfied, mercaptosilane of the linking unit B is covered by $-C_7H_{15}$ of the linking unit A; thus, it is possible to suppress a scorch time from becoming short, and also a good reactivity between fumed silica and the diene-based rubber can be ensured. Specific examples of mercapto-thiocarboxylate oligomer include "NXT-Z45" made by Momentive.

[Chemical Formula 1]

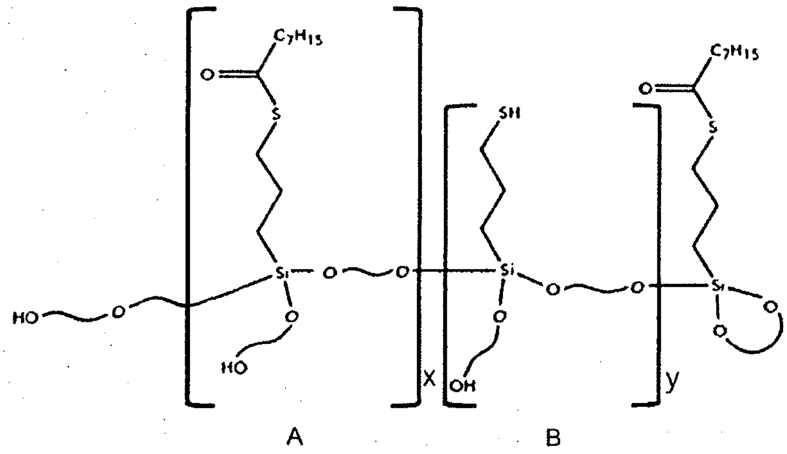

The blending amount of the silane coupling agent in the tire rubber composition is preferably 0.1 parts by mass or more and 30 parts by mass or less with respect to 100 parts by mass of the diene-based rubber. When the blending amount of the silane coupling agent is within the above-mentioned range, the tire rubber material achieving a good fuel efficiency in addition to good wear resistance and fatigue-crack resistance can be obtained easily.

The blending amount of the silane coupling agent is preferably 1.5 parts by mass or more, more preferably 2.0 parts by mass or more, or 2.5 parts by mass or more with respect to 100 parts by mass of the diene-based rubber. Also, the blending amount of the silane coupling agent is preferably 27 parts by mass or less, more preferably 25 parts by mass or less, or even more preferably 20 parts by mass or less with respect to 100 parts by mass of the diene-based rubber.

Also, in the tire rubber composition, the amount of the silane coupling agent, that is, a total of the silane coupling agent to be blended and the silane coupling agent in the reclaimed rubber is preferably 0.1 parts by mass or more and 30 parts by mass or less, more preferably 2.0 parts by mass or more and 25 parts by mass or less, or even more preferably 2.5 parts by mass or more and 20 parts by mass or less with respect to 100 parts by mass of the total of the diene-based rubber and the rubber component in the reclaimed rubber. When the amount of the silane coupling agent is too small, the dispersibility of fumed silica in the tire rubber composition tends to become insufficient. When the amount of the silane coupling agent is too large, the silane coupling agent tends to condensate easily, and the wear resistance and the fatigue-crack resistance of the obtained tire rubber material may not improve sufficiently.

Also, within the range of the blending amount of the silane coupling agent with respect to 100 parts by mass of the diene-based rubber or the rubber component, as the BET specific surface area of fumed silica increases, the blending amount of the silane coupling agent is preferably increased in relativity. This is because sufficient reaction points with fumed silica can be secured. Specifically, with respect to the specific surface area of the added silica, the silane coupling agent is particular preferably added within the range of 0.33 to 1 $mg/m^2$.

(1.4. Other Components)

In the present embodiment, in addition to the above-mentioned components (the diene-based rubber, the reclaimed rubber, fumed silica, and the silane coupling agent), the tire rubber composition may include a component included in the rubber composition. Examples of such component include lubricants. By blending the lubricant, the kneadability of each component is improved, and the tire rubber composition having each component being sufficiently dispersed can be easily obtained.

Examples of the lubricants include stearic acid and process oils. Examples of the process oils include aroma oil, paraffin oil, and naphthenic oil. Single lubricant may be used, or two or more lubricants may be used together.

A blending amount of the lubricant is not particularly limited as long as the effect of the present disclosure can be attained. For example, the blending amount of the lubricant is preferably 1 part by mass or more and 40 parts by mass or less, more preferably 2 parts by mass or more and 35 parts by mass or less, and even more preferably 3 parts by mass or more and 30 parts by mass or less with respect to 100 parts by mass of the diene-based rubber.

When the blending amount of the lubricant is too small, viscosity increases and kneadability decreases; hence, the wear resistance and the fatigue-crack resistance of the obtained tire rubber material may not improve sufficiently. When the blending amount of the lubricant is too large, shearing cannot be done properly; thus, fumed silica may not

disperse sufficiently in the diene-based rubber.

Further, the tire rubber composition may include a reinforcing filler in addition to fumed silica. Examples of the reinforcing filler include carbon black, silica produced by wet-process, clay, mica, talc, calcium carbonate, aluminum hydroxide, aluminum oxide, and titanium oxide. In the case where the reinforcing filler is blended, an appropriate amount of a filler coupling agent can be blended as well. The blending amount of the reinforcing filler is not particularly limited as long as the effect of the present disclosure can be attained, and it may be a usual blending amount.

Further, the tire rubber composition may include various additives such as zinc oxide, antioxidants, plasticizers, processing aids, liquid polymers, and heat curable resins. The blending amount of these additives is not particularly limited as long as the effect of the present disclosure is attained, and the blending amount may be a usual amount.

(2. Method for Producing Tire Rubber Composition)

The tire rubber composition according to the present embodiment is obtained by kneading the above-mentioned diene-based rubber and the reclaimed rubber, and also by kneading other components depending on needs (such as fumed silica, the silane coupling agent, the lubricant, the reinforcing filler, and various additives). In the present embodiment, during the step of kneading the diene-based rubber and the reclaimed rubber, preferably the above-mentioned fumed silica and the above-mentioned silane coupling agent are blended and kneaded; and furthermore, preferably at least one selected from the lubricant, the reinforcing filler, and various additives is blended and kneaded.

In the present embodiment, the master batch obtained by kneading the predetermined components is produced, and then the rest of the components may be blended and kneaded with the master batch; thereby, the tire rubber composition may be produced. Alternatively, all of the components may be kneaded together to form the tire rubber composition.

In the case of making the master batch, the above-mentioned diene-based rubber and other components (such as fumed silica, the silane coupling agent, the lubricant, the reinforcing filler, various additives, and the reclaimed rubber) are kneaded. In the present embodiment, preferably at least the diene-based rubber and fumed silica are kneaded to make the master batch, and more preferably at least the diene-based rubber, fumed silica, and the silane coupling agent are kneaded to make the master batch.

In the present embodiment, the master batch may include 13 parts by mass or more and 130 parts by mass or less, 15 parts by mass or more and 110 parts by mass or less, or 20 parts by mass or more and 100 parts by mass or less of fumed silica with respect to 100 parts by mass of the diene-based rubber.

Also, in the present embodiment, in addition to the fumed silica, the master batch may include 1 part by mass or more and 40 parts by mass or less, 1.5 parts by mass or more and 30 parts by mass or less, or 2 parts by mass or more and 20 parts by mass or less of the silane coupling agent with respect to 100 parts by mass of the diene-based rubber.

In the present embodiment, the master batch is preferably a kneaded product which is to be kneaded with the blending components which at least include the rubber component. That is, the master batch is preferably kneaded with other blending components which at least include the rubber component to form part of the tire rubber composition.

When the master batch includes fumed silica, a content ratio of fumed silica with respect to the rubber component in the master batch is preferably higher than a content ratio of fumed silica with respect to the entire rubber component in the tire rubber composition including the master batch. A concentration of fumed silica with respect to the amount of the rubber component in the master batch is preferably higher than a concentration of fumed silica with respect to the amount of the rubber component in the tire rubber composition. In other words, in the present embodiment, the master batch is preferably a kneaded product including fumed silica in a high concentration.

As a kneading machine for making the master batch, any known kneading machines such as a Banbury mixer and a kneader can be used.

After producing the master batch, by adding and kneading the other components with the master batch, the tire rubber composition can be obtained. In the present embodiment, as shown in FIG. 1, the master batch, the reclaimed rubber, the diene-based rubber, and the other components are preferably kneaded. For example, the master batch and the other components can be kneaded using any known kneading machines such as a Banbury mixer and a kneader.

In the case of producing the tire rubber composition by kneading all of the components, all of the components may be placed into the known kneading machines such as a Banbury mixer and a kneader at the same time or one component at a time.

Kneading conditions may be set to conditions which allows each component to be sufficiently kneaded.

(3. Tire Rubber Material)

The tire rubber material according to the present embodiment is a material made by vulcanizing the above-mentioned tire rubber composition. Therefore, the tire rubber material includes the components derived from the above-mentioned reclaimed rubber. As a result, the tire rubber material can exhibit excellent wear resistance, tensile strength at

break, fatigue-crack resistance, and fuel efficiency. That is, even though the tire rubber material according to the present embodiment includes the components derived from the reclaimed rubber, it achieves the properties similar to a tire rubber material having the same composition but not including the reclaimed rubber. Further, compared to the tire rubber material which does not include the reclaimed rubber but includes carbon black, the tire rubber material according to the present embodiment achieves excellent balance between wear resistance, tensile strength at break, fatigue-crack resistance, and fuel efficiency.

Particularly, tear strength TS of the tire rubber material according to the present embodiment is preferably 40 kN/m or greater, more preferably 42 kN/m or greater, or even more preferably 44 kN/m or greater. The upper limit of the tear strength is not particularly limited, and for example, it may be 200 kN/m.

The tear strength TS can be measured based on JIS K6252-1. Also, a curve showing a change in the tear strength obtained from the measurement is analyzed based on JISK6274, and according to the analysis result, the tear strength TS can be calculated. Note that, details of the measuring method are explained in Examples.

Therefore, the above-mentioned reclaimed rubber including fumed silica effectively functions as an additive to improve the properties of the rubber material.

The tire rubber material according to the present embodiment exhibits excellent wear resistance, tensile strength at break, fatigue-crack resistance, and fuel efficiency; thus, it can be suitably used for tires of trucks and buses. Also, it can be suitably used as configurational parts of tires such as a tread, a base tread, a side wall, and a clinch.

The embodiments of the present disclosure are described hereinabove. However, the present disclosure is not limited to the above-mentioned embodiments, and various modifications are possible within the scope of the present disclosure.

EXAMPLES

In below, the present disclosure is described in further details using examples. Note that, the present disclosure is not limited to below described examples.

(Experiment 1)

(Preparation of Master Batch)

Below components were placed in a pressure kneader of a capacity of 0.5 L so that the blending amounts of the components with respect to 100 parts by mass of a diene-based rubber satisfied the amounts shown in Table 1. After placing the components in the pressure kneader, the components were kneaded for about 30 minutes so that a temperature of a kneaded material was at a temperature of 130 to 160°C at a rotor rotational speed between 20 to 40 rpm. An air cylinder pressure was 0.7 MPa. After kneading was done, a kneaded material was cooled to room temperature, and the kneaded material was taken out. Thereby, a master batch (production example) was obtained.

Also, the below components were placed in Labo Plastomill (BB600 made by Toyo Seiki Seisaku-sho, Ltd.) of a capacity of 0.6 L so that the blending amounts of the components with respect to 100 parts by mass of a diene-based rubber satisfied the amounts shown in Table 1. After placing the components in Labo Plastomill, the components were kneaded for about 5 to 10 minutes so that a temperature of a kneaded material was at a temperature of 120 to 140°C at a rotor rotational speed between 20 to 40 rpm After kneading was done, a kneaded material was cooled to room temperature, and the kneaded material was taken out. Thereby, a master batch (standard production example) was obtained.

(A) Diene-based rubber
(A-1) Natural rubber (RSS3, made in THAILAND)
(B) Filler

(B-1) Hydrophilic fumed silica (REOLOSIL QS-30C manufactured by Tokuyama Corporation, a nitrogen absorption BET specific surface area: 300 $m^2$/g, a tap density: 100 g/L)
(B-2) Carbon black (Seast 6, manufactured by Tokai Carbon Co., Ltd., a nitrogen adsorption BET specific surface area of 120 $m^2$/g and a tap density:400 g/L)

(C) Silane coupling agent
(C-1) Mercapto-thiocarboxylate oligomer (NXT-Z45, manufactured by Momentive)
(E) Other ingredients

(E-1) Lubricant (stearic acid, Bead Stearic Acid YR, manufactured by NOF Corporation)
(E-2) Process oil (Extract No. 4S (TDAE Oil), manufactured by Showa Shell Sekiyu)

(E-3) Antioxidant (Ozonone 6C, manufactured by Seiko Chemical Co., Ltd.)
(E-4) Lubricant (Zinc oxide, Zinc oxide III, manufactured by

SEIDO CHEMICAL INDUSTRY CO., LTD)

[Table 1]

| | | | Production example | Standard production example |
|---|---|---|---|---|
| Blending components of Master Batch | Diene-based rubber | A-1 | 100 | 100 |
| | Filler | B-1 | 64 | - |
| | | B-2 | 3 | 45 |
| | Silane coupling agent | C-1 | 12.8 | - |
| | Other components | E-1 | 6 | - |
| | | E-2 | 4 | - |
| | | E-3 | 1 | - |

(Preparation of Tire Rubber Composition)

The obtained master batch, the above-mentioned components depending on needs, and the below described reclaimed rubber, and (E-4) were placed in Labo Plastomill (BB600 made by Toyo Seiki Seisaku-sho, Ltd.) of a capacity of 0.6 L. After placing the components in Labo Plastomill, these were kneaded for about 10 minutes so that a temperature of a kneaded material was at a temperature of 130 to 160°C at a rotor rotational speed between 20 to 100 rpm . After kneading was done, the kneaded material was cooled to room temperature, and a kneaded material was obtained.
The below described (E-5) and (E-6) were blended to the obtained kneaded material, and mixed using a 6-inch roll tester; thereby, a tire rubber composition was obtained. Contents of the obtained tire rubber composition are shown in Table 2.

(D) Reclaimed Rubber

(D-1) Fumed silica-containing reclaimed rubber
(D-2) Carbon black-containing tire reclaimed rubber (tire reclaimed rubber AP, manufactured by Asahi Saiseigomu Co., Ltd.)

(E) Other Components

(E-4) Lubricant (Zinc oxide, Zinc oxide III, manufactured by SEIDO CHEMICAL INDUSTRY CO., LTD)
(E-5) Sulfur (GOLDEN FLOWER OIL TREATED SULFUR POWDER, manufactured by Tsurumi Chemical Industry Co., ltd.)
(E-6) Vulcanizing accelerator (N-(tert-butyl)-2-benzothiazol sulfenamide (TBBS), Sanseller-NS-G, manufatured by SANSHIN CHEMICAL INDUSTRY CO., LTD.)

Note that, as the fumed silica-containing reclaimed rubber, the below described reclaimed rubber was used. The tire rubber composition shown in Reference example 1 of Table 2 was press-vulcanized for 10 minutes at 150°C and a rubber material was obtained. Then, the obtained rubber material was heat aged in a drier at 80°C for 120 hours. The heat-aged rubber material was de-vulcanized, and thereby, a reclaimed rubber was made. The obtained reclaimed rubber satisfied conditions set forth in JIS K 6313.

[Table 2]

| | | | Referance example 1 | Example 1 | Example 2 | Example 3 | Example 4 | Example 5 | Example 6 | Comparative example 1 (Standard example 1) | Comparative example 2 | Comparative example 3 | Comparative example 4 |
|---|---|---|---|---|---|---|---|---|---|---|---|---|---|
| Blending of Tire rubber composition | Diene-based rubber | A-1 | 100 | 100 | 100 | 100 | 100 | 100 | 100 | 100 | 100 | 100 | 100 |
| | Filler | B-1 | 32 | 32 | 32 | 32 | 32 | 32 | 32 | - | - | - | - |
| | | B-2 | 13 | 13 | 13 | 13 | 13 | 13 | 13 | 45 | 45 | 45 | 45 |
| | Silane coupling agent | C-1 | 6.4 | 6.4 | 6.4 | 6.4 | 6.8 | 7.2 | 7.6 | - | - | - | - |
| | Reclaimed rubber | D-1 | 0 | 10 | 20 | 30 | 10 | 20 | 30 | - | - | - | - |
| | | D-2 | - | - | - | - | - | - | - | 0 | 10 | 20 | 30 |
| | Other components | E-1 | 3.0 | 3.0 | 3.0 | 3.0 | 3.0 | 3.0 | 3.0 | 3.0 | 3.0 | 3.0 | 3.0 |
| | | E-2 | 2.0 | 2.0 | 2.0 | 2.0 | 2.0 | 2.0 | 2.0 | 2.0 | 2.0 | 2.0 | 2.0 |
| | | E-3 | 2.0 | 2.0 | 2.0 | 2.0 | 2.0 | 2.0 | 2.0 | 2.0 | 2.0 | 2.0 | 2.0 |
| | | E-4 | 3.0 | 3.0 | 3.0 | 3.0 | 3.0 | 3.0 | 3.0 | 3.0 | 3.0 | 3.0 | 3.0 |
| | | E-5 | 2.4 | 2.4 | 2.4 | 2.4 | 2.4 | 2.4 | 2.4 | 2.4 | 2.4 | 2.4 | 2.4 |
| | | E-6 | 1.6 | 1.6 | 1.6 | 1.6 | 1.6 | 1.6 | 1.6 | 1.2 | 1.2 | 1.2 | 1.2 |
| Properties of tire rubber material | A hardness | | 65 | 64 | 63 | 61 | 64 | 62 | 62 | 69 | 68 | 68 | 67 |
| | Strength | Rupture strength (MPa) | 35.1 | 32.3 | 33.2 | 30.1 | 33.4 | 32.1 | 26.8 | 29.0 | 27.4 | 27.4 | 25.7 |
| | Fuel efficiency | Rolling resisntace index | 131 | 131 | 125 | 120 | 145 | 132 | 133 | 100 | 89 | 86 | 82 |
| | Wear resistance | Wear index | 146 | 151 | 151 | 155 | 160 | 143 | 147 | 100 | 102 | 107 | 108 |

(Preparation of Tire Rubber Material)

Next, the obtained tire rubber composition was press-vulcanized at 150°C for 10 minutes; thereby, the tire rubber material was obtained. A test piece was made from the obtained tire rubber material to perform evaluations shown in below. The obtained test piece was used to evaluate the below described physical properties.

(A Hardness)

Regarding the test piece of the obtained tire rubber material, hardness (Shore A hardness) was measured using a durometer in accordance with JIS K6253 Type A. The results are shown in Table 2.

(Tensile Strength at Break)

The obtained tire rubber composition was vulcanized at 160°C for T90 + 1 minute using a mold with a thickness of 2 mm to obtain a vulcanized rubber sheet. The obtained vulcanized rubber sheet was punched into samples using a JIS No. 3 dumbbell die. The tensile strength at break of this sample was measured using a tensile tester in accordance with JIS K6251. The results are shown in Table 2.

(Fuel Efficiency: tan δ at 60°C)

A dynamic viscoelasticity tester (VR-7130, manufactured by Ueshima Seisakusho Co., Ltd.) under the conditions described below was used to the test piece of the obtained tire rubber material in accordance with JIS K6394. Based on the measured values at 60°C, tan δ (60°C) was calculated.

Measurement temperature: 60°C
Static strain: 10%
Dynamic strain: ±2%
Frequency: 10 Hz

The measured tan δ at 60°C of Comparative Example 1 (Standard Example 1) was set to 100, and a rolling resistance index was calculated using a formula shown in below. The larger the index, the better the rolling resistance. The results are shown in Table 2.

(Rolling Resistance Index) = 100 × (tan δ at 60°C of Standard Example 1)/(tan δ at 60°C of each Example or Comparative Example)

(Wear Resistance: FPS Wear Loss)

For the test piece of the obtained tire rubber material, the FPS wear loss was measured using an FPS abrasion tester (Model AB-2012, manufactured by Ueshima Seisakusho Co., Ltd.) under the conditions of a temperature of 20°C, a load of 40 N, a slip ratio of 10%, and a test duration of 2 minutes. A wear index was calculated using the formula shown in below, with the FPS wear loss of Comparative Example 1 (Standard Example 1) set to 100. The larger the index, the better the wear resistance. The results are shown in Table 2.

(Wear Index) = 100 × (FPS abrasion loss of Standard Example 1)/(FPS wear loss of each Example or Comparative Example)

According to Table 2, it was confirmed that the tire rubber material including the reclaimed rubber containing fumed silica exhibited properties which were about the same as those of the tire rubber material with the same composition but without the reclaimed rubber. Furthermore, it was confirmed that the tire rubber material including the reclaimed rubber containing fumed silica demonstrated better properties than the tire rubber material including carbon black.

(Experiment 2)

Tire rubber materials were obtained using the same method as in the case of Experiment 1 so that the compositions shown in Table 3 were satisfied using the master batch made in Experiment 1 (the production example and the standard production example) and each of the components (A) to (E). Note that, as the reclaimed rubber (D-2),

instead of using the carbon black-containing tire reclaimed rubber, a reclaimed rubber was used which was obtained by desulfurizing a rubber material which was made by vulcanizing the rubber composition shown in Comparative Example 11 (Standard example 11) of Table 3. Said reclaimed rubber satisfied the requirements set forth in JIS K 6313. The processing conditions of vulcanization, heat aging, and desulfurization were the same as those used for the fumed silica-containing reclaimed rubber of Experiment 1.

As shown in Table 3, the composition of Reference Example 11 was the same as the composition of the Reference Example 1, the compositions of Examples 11 to 13 were the same as the compositions of Examples 1 to 3, and the compositions of Comparative Examples 11 to 14 were the same as the compositions of Comparative Examples 1 to 4.

[Table 3]

| | | | Reference example 11 | Example 11 | Example 12 | Example 13 | Example 14 | Comparative example 11 (Standard example 11) | Comparative example 12 | Comparative example 13 | Comparative example 14 |
|---|---|---|---|---|---|---|---|---|---|---|---|
| Blending of Tire rubber composition | Diene-based rubber | A-1 | 100 | 100 | 100 | 100 | 100 | 100 | 100 | 100 | 100 |
| | Filler | B-1 | 32 | 32 | 32 | 32 | 32 | - | - | - | - |
| | | B-2 | 13 | 13 | 13 | 13 | 13 | 45 | 45 | 45 | 45 |
| | Silane coupling agent | C-1 | 6.4 | 6.4 | 6.4 | 6.4 | 6.4 | - | - | - | - |
| | Reclaimed rubber | D-1 | 0 | 10 | 20 | 30 | 50 | - | - | - | - |
| | | D-2 | - | - | - | - | - | 0 | 10 | 20 | 30 |
| | Other components | E-1 | 3.0 | 3.0 | 3.0 | 3.0 | 3.0 | 3.0 | 3.0 | 3.0 | 3.0 |
| | | E-2 | 2.0 | 2.0 | 2.0 | 2.0 | 2.0 | 2.0 | 2.0 | 2.0 | 2.0 |
| | | E-3 | 2.0 | 2.0 | 2.0 | 2.0 | 2.0 | 2.0 | 2.0 | 2.0 | 2.0 |
| | | E-4 | 3.0 | 3.0 | 3.0 | 3.0 | 3.0 | 3.0 | 3.0 | 3.0 | 3.0 |
| | | E-5 | 2.4 | 2.4 | 2.4 | 2.4 | 2.4 | 2.4 | 2.4 | 2.4 | 2.4 |
| | | E-6 | 1.6 | 1.6 | 1.6 | 1.6 | 1.6 | 1.2 | 1.2 | 1.2 | 1.2 |
| Properties of tire rubber material | Fatigue crack resistance | Tear strength kN/m | 51.8 | 59.5 | 56.6 | 53.7 | 44.5 | 19.6 | 28.8 | 29 | 38.7 |
| | | Tear strength index | 264 | 304 | 289 | 274 | 227 | 100 | 147 | 148 | 197 |

Test pieces were made from the obtained tire rubber materials, and the fatigue-crack resistance was evaluated as described in below.

(Fatigue-Crack Resistance: Tear Strength)

The test pieces of the obtained rubber materials were punched into a rectangular shape with a long side of 130 mm and a short side of 40 mm. A slit of 70 mm long was made from the midpoint of the short side to the long side direction; thereby, test pieces each having a trouser shape were obtained. A thickness of the test piece was 1 mm. A tensile test was performed to the test piece of a trouser shape at a tensile speed of 100 mm/min as set forth in JIS K6252-1; thereby, a tear force at the point when the test piece ruptured was measured. The measured tear force was analyzed using JIS K6274 to calculate tear strength. Results are shown in Table 3. Also, the calculated tear strength (TS) of Comparative Example 11 (Standard Example 11) was set to 100, and a tear strength indexes of Reference Example 11, Examples 11 to 13, and Comparative Examples 12 to 13 were calculated using the below formula. The higher the index, the better the fatigue crack resistance. The results are shown in Table 3.

(Tear Strength Index) = 100 $\times$ (Tear Strength of Example or Comparative Example)/(Tear Strength of Standard Example 11)

According to Table 3, it was confirmed that the tire rubber material including the reclaimed rubber containing fumed silica exhibited about the same properties as the tire rubber material having the same composition but without the reclaimed rubber. Also, it was confirmed that the tire rubber material including the reclaimed rubber containing fumed silica exhibited better properties than the tire rubber material including carbon black.

## Claims

1. A tire rubber composition comprising 5 parts by mass or more and 100 parts by mass or less of a reclaimed rubber including fumed silica with respect to 100 parts by mass of a diene-based rubber.

2. The tire rubber composition according to claim 1 further comprising 5 parts by mass or more and 90 parts by mass or less of a fumed silica.

3. The tire rubber composition according to claim 1 further comprising 0.1 parts by mass or more and 30 parts by mass or less of a silane coupling agent.

4. The tire rubber composition according to claim 2 further comprising 0.1 parts by mass or more and 30 parts by mass or less of a silane coupling agent.

5. A tire rubber material made by vulcanizing the tire rubber composition according to any one of claims 1 to 4.

6. The tire rubber material according to claim 5, wherein a tear strength TS is 40 kN/m or greater.

7. A method for producing a tire rubber composition comprising a step of obtaining the tire rubber composition by kneading a diene-based rubber and a reclaimed rubber including fumed silica;
wherein the tire rubber composition includes 5 parts by mass or more and 100 parts by mass or less of the reclaimed rubber including fumed silica with respect to 100 parts by mass of the diene-based rubber.

8. The method for producing the tire rubber composition according to claim 7, wherein a master batch obtained by kneading a diene-based rubber and a fumed silica is further blended and kneaded during the step of obtaining the tire rubber composition,
wherein the tire rubber composition includes 5 parts by mass or more and 100 parts by mass or less of the reclaimed rubber including fumed silica with respect to a total of 100 parts by mass of the diene-based rubber included in the master batch and the diene-based rubber blended during the step of obtaining the tire rubber composition.

9. The method for producing the tire rubber composition according to claim 7 further comprising a step of obtaining the reclaimed rubber including fumed silica by processing a rubber material including fumed silica.

**10.** The method for producing the tire rubber composition according to claim 7 further blending and kneading 5 parts by mass or more and 90 parts by mass or less of a fumed silica with respect to 100 parts by mass of the diene-based rubber during the step of obtaining the tire rubber composition.

**11.** The method for producing the tire rubber composition according to claim 7 further blending and kneading 0.1 parts by mass or more and 30 parts by mass or less of a silane coupling agent with respect to 100 parts by mass of the diene-based rubber during the step of obtaining the tire rubber composition.

**12.** A method for producing a tire rubber material comprising a step of vulcanizing the tire rubber composition obtained by the method for producing the tire rubber composition according to any one of claims 7 to 11.

**13.** A reclaimed rubber including a fumed silica.

**14.** The reclaimed rubber according to claim 13 comprising 5 parts by mass or more and 90 parts by mass or less of the fumed silica with respect to 100 parts by mass of a rubber component included in the reclaimed rubber.

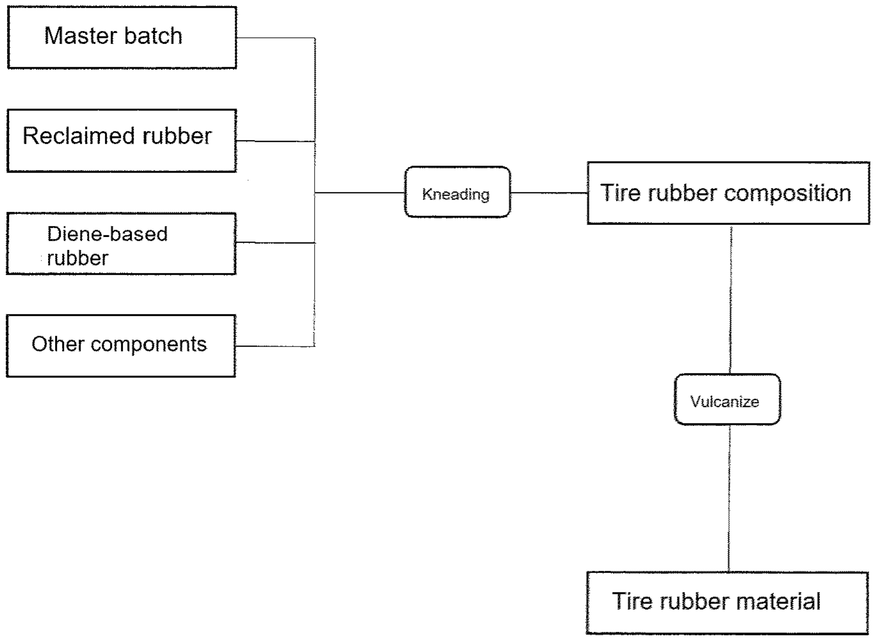
Master batch
Reclaimed rubber
Diene-based rubber
Other components
Kneading
Tire rubber composition
Vulcanize
Tire rubber material

**INTERNATIONAL SEARCH REPORT**

International application No.
**PCT/JP2024/012319**

**A. CLASSIFICATION OF SUBJECT MATTER**

***C08L 21/00***(2006.01)i; ***B60C 1/00***(2006.01)i; ***C08K 3/36***(2006.01)i; ***C08K 5/541***(2006.01)i; ***C08L 9/00***(2006.01)i; ***C08L 17/00***(2006.01)i
FI: C08L21/00; C08K3/36; C08L17/00; C08K5/541; B60C1/00 Z; C08L9/00

According to International Patent Classification (IPC) or to both national classification and IPC

**B. FIELDS SEARCHED**

Minimum documentation searched (classification system followed by classification symbols)

C08L21/00; B60C1/00; C08K3/36; C08K5/541; C08L9/00; C08L17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-232885 A (THE YOKOHAMA RUBBER CO., LTD.) 07 September 2006 (2006-09-07)<br>claims, paragraphs [0024], [0027], examples, etc. | 1, 3, 5-7, 9, 11-14 |
| X | JP 2013-537257 A (CABOT CORPORATION) 30 September 2013 (2013-09-30)<br>claims, examples, etc. | 1, 3, 5-7, 9, 11-14 |
| X | JP 2018-524450 A (CABOT CORPORATION) 30 August 2018 (2018-08-30)<br>claims, examples, etc. | 1, 3, 5-7, 9, 11-14 |
| A | JP 2022-072813 A (TOKUYAMA CORPORATION) 17 May 2022 (2022-05-17) | 1-14 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/012319**

| Patent document cited in search report | Publication date (day/month/year) | Patent family member(s) | Publication date (day/month/year) |
|---|---|---|---|
| JP 2006-232885 A | 07 September 2006 | (Family: none) | |
| JP 2013-537257 A | 30 September 2013 | US 2013/0158164 A1<br>claims, examples, etc.<br>US 2014/0316058 A1<br>CN 103221463 A | |
| JP 2018-524450 A | 30 August 2018 | US 2017/0306106 A1<br>claims, examples, etc.<br>US 2017/0306107 A1<br>US 2017/0306108 A1<br>US 2018/0201753 A1<br>US 2018/0251609 A1<br>US 2018/0273701 A1<br>US 2018/0273702 A1<br>US 2019/0375899 A1<br>US 2019/0375901 A1<br>US 2019/0375902 A1<br>CN 108026314 A<br>CN 108026315 A<br>CN 108026316 A<br>CN 108291049 A | |
| JP 2022-072813 A | 17 May 2022 | EP 4219615 A1<br>KR 10-2023-0098174 A<br>CN 116490558 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018123272 A
- WO 2016024397 A
- WO 2004099075 A